# EUROPEAN PATENT APPLICATION

(11) **EP 0 907 295 A2**
(43) Date of publication of application: **07.04.1999**
(21) Application number: 98118642.2
(22) Date of filing: 02.10.1998
(51) Int. Cl.: H04Q 3/66, H04Q 7/38

(54) **Method of setting a connection in a mobile communication network**

(30) Priority: 02.10.1997 JP 269949/97
(71) Applicant: NEC CORPORATION, Tokyo (JP)
(72) Inventor: Okazaki, Kenichi, Minato-ku, Tokyo (JP)
(74) Representative: Baronetzky, Klaus, Dipl.-Ing.

(57) **Abstract**

A method of connection setting for the mobile communication network, which can prevent the use efficiency of the connection from being remarkably lowered even when a mobile station has moved to the service area controlled by different mobile control center, is realized. A gateway switch monitors a color code notified from a mobile switching center, and when the color code change is detected, as it means that the mobile station has moved from the service area of one base station to another, the shortest routing from the gateway switch to the mobile switching center which is controlling the subject base station is searched, and re-establishment of connections using the searched shortest routing is performed in stead of connections sequentially established between the mobile switching centers along the movement path of the mobile station.

## Description

### BACKGROUND OF THE INVENTION

### Field of the Invention

The present invention relates to a TDMA mobile communication system, more particularly, to a method of setting a connection, or a communication path, in a mobile communication network for a mobile station which moves around the service area of the mobile communication system.

### Description of the Related Art

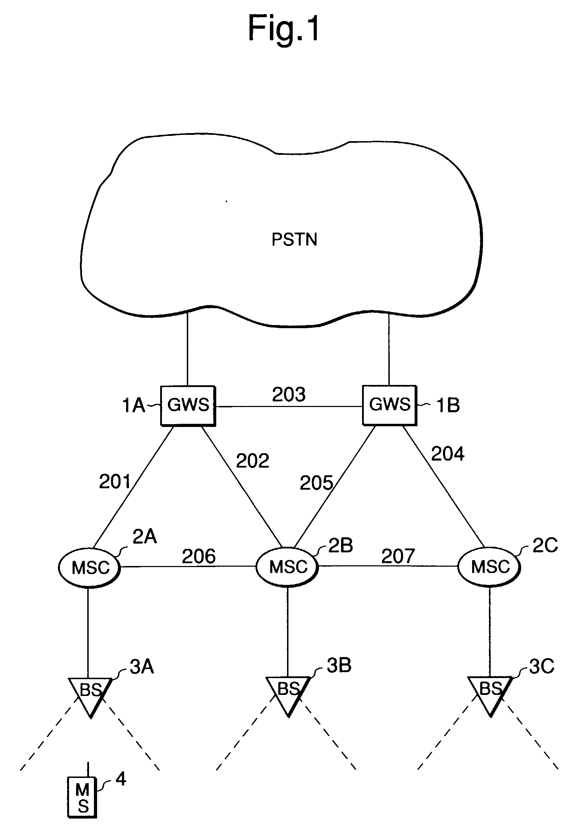

Fig. 1 is an explanatory diagram showing an example of a hierarchical configuration of the mobile communication network.

A gateway switch (GWS) is provided as an interface switching system between the mobile communication network and a present switching telephone network (PSTN), and if the service area of the mobile communication network is wide enough, a plurality of GWSes are provided depending on a geographical condition. The GWS locates in the highest heirarchy of the mobile communication network, and it performs necessary controls required for communications between the mobile communication network and the PSTN.

A plurality of mobile switching centers (MSCs) are provided in the mobile communication network for constituting a communication network, and handling communication traffic within the mobile communication network. Each MSC is connected with one or more base stations (BSs) which provide radio areas for radio communication with mobile stations (MSs). The time division multiple access (TDMA) system is utilized for the radio communication between the BS and the MSs.

In this mobile communication network, an MS moves around in the service area provided by a plurality of radio areas, and when the MS moves over one radio area to another radio area, the handover operation is performed for changing a BS under communicating. In a communication network point of view, when the handover is performed, a communication path (a connection) is also to be changed if new BS to communicate with the MS after handover is connected to a different MSC from the MSC connecting the BS which has been communicating with the MS befor handover.

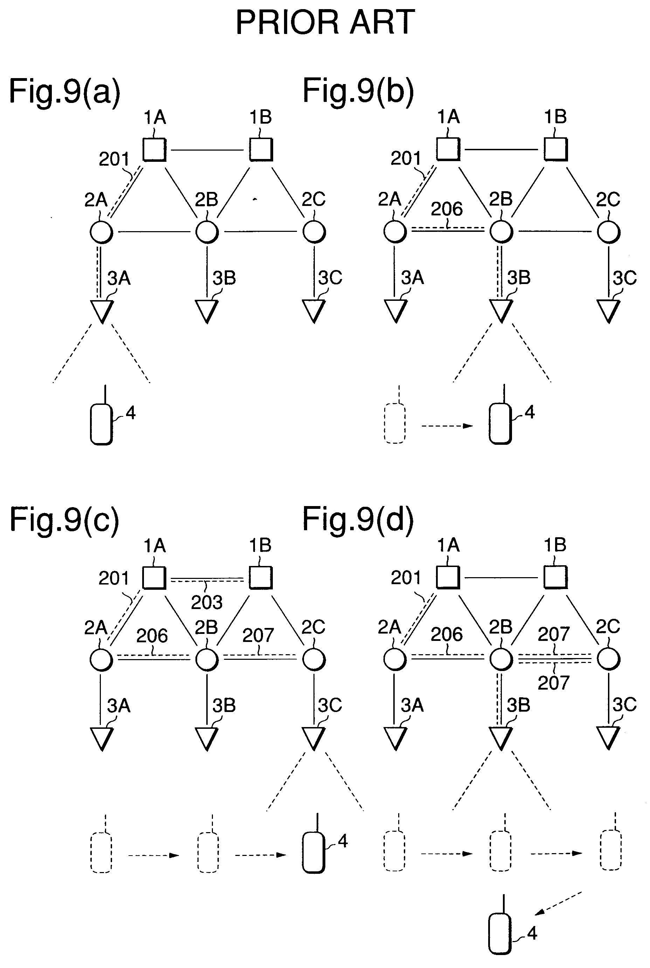

Conventionally, in the mobile communication network, when an MS, whose destination of the communication is the PSTN, is moved over to a different radio area, a connection is newly to be set between a GWS and an MSC through a method shown in Fig. 9.

Fig. 9 is an explanatory diagram showing an example of a conventional connection setting.

In this example, a GWS 1A is connected with MSCs 2A and 2B, and a GWS 1B is connected with MSCs 2B and 2C. Also, the respective MSCs 2A to 2C are connected with BSs 3A to 3C, respectively. Further, a connection is provided between the GWSes 1A and 1B, between the MSCs 2A and 2B, and between the MSCs 2B and 2C.

It is assumed that the MS 4 is locating in a radio area of the BS 3A which is connected with the MSC 2A, and as shown in Fig. 9(a), a connection 201 has been established between the MSC 2A and the GWS 1A.

In this situation, in the case where the MS 4 has moved over from radio area of the BS 3A to the inside of the radio area of the BS 3B which is controlled by another MSC, the hand-over operation from BS 3A to BS 3B is performed, and at the same time, routing from the MSC 2A to the MSC 2B is searched for extending communication path to new BS.

Then, as shown in Fig. 9(b), a connection 206 is established between the MSCs 2A and 2B, and the GWS 1A and the MSC 2B are connected to each other through the connections 201 and 206.

Subsequently, in the case where the MS 4 has moved to the radio area of the BS 3C which is controlled by another MSC 2C, routing from the MSC 2B to the MSC 2C is searched for extending communication path to new BS. Then, as shown in Fig. 9(c), a connection 207 is established between the MSCs 2B and 2C, and the GWS 1A and the MSC 2C are connected to each other through the connections 201, 206 and 207.

Also, in the case where the MS 4 has moved back to the radio area of the BS 3B, routing from the MSC 2C to the MSC 2B is again searched for extending communication path to new BS (BS 3B). Then, as shown in Fig. 9(d), a connection 207 back to the MSC 2B is established between the MSCs 2C and 2B, and the GWS 1A and the MSC 2B are connected to each other through the connections 201, 206, 207 and 207 (from MSC 2C back to MSC 2B).

However, in the above-described conventional connection setting method for the mobile communication network, in the case where the MS has moved around in the service area provided by a plurality of the BSs each of which is controlled by different MSC, and further in the case where the MS has moved to service area controlled under different GWS, because connections are sequentially set between the MSCS along the moving path of the MS, there arises such a problem that the use efficiency of communication path (or transmission line) is deteriorated so that a network resource is not effectively used.

### SUMMARY OF THE INVENTION

The present invention has been made to solve the above problem, and an object of the present invention is to provide a connection setting method for the mobile communication network which can prevent the use efficiency of the communication path from being remarkably lowered even when an MS has moved to the service area controlled by different MSC.

In order to achieve the above object, according to the present invention, a method of connection setting for a mobile communication network which is constituted by a plurality of mobile switching centers, each accommodating a plurality of base stations for communicating with mobile stations, and a plurality of gateway switches, each inter connecting the mobile communication network and the present switched telephone network (PSTN), the method comprises steps of:
searching the shortest routing from the gateway switch to the mobile switching center which is accommodating the base station under communicating with the mobile station, when a hand-over operation of the mobile station is detected and the mobile switching center is different from the mobile switching center accommodating the base station communicated with the mobile station before the hand-over operation; and
re-establishing new connections from the gateway switch to the mobile switching center which is accommodating the base station under communicating with the mobile station, if the shortest routing is available.

In this method of connection setting, the gateway switch is provided with a connection table which indicates all routes from own gateway switch to each mobile switching center constituting the mobile switching network with busy or idle state information for each route, and the gateway switch performing operations of searching a route, which involves a minimum number of nodes along the route and also the state information is an idle state, comparing with existing route to the destination mobile switching center, and selecting the searched route for re-establishing if the searched route is shorter than the existing route.

When the time division multiple access (TDMA) system is introduced in the mobile communication network, the method comprises steps of:
receiving and storing a color code, contained in a time slot of the TDMA signal as identification information of base station under communication, at the gateway switch through the mobile switching center which is accommodating the base station;
detecting a change of the color code in response to a hand-over operation resulted by the movement of the mobile station from service area of one base station to another base station;
searching the shortest routing from the gateway switch to the mobile switching center accommodating the base station under communicating with the mobile station, when the mobile switching center is different from the mobile switching center accommodating the base station communicated with the mobile station before the hand-over operation; and
re-establishing new connections from the gateway switch to the mobile switching center accommodating the base station under communicating with the mobile station, if the shortest routing being available.

### BRIEF DESCRIPTION OF THE DRAWINGS

Fig. 1 is an explanatory diagram showing an example of a hierarchical configuration of the mobile communication network.
Fig. 2 is a block diagram showing a TDMA mobile communication system according to an embodiment of the present invention.
Fig. 3 is an explanatory diagram showing an example of a time slot signal format of a TDMA frame.
Fig. 4 shows an example of a table in the GWS 1A for each connection state in the mobile communication network.
Fig. 5 is an explanatory diagram showing an example of the mobile communication network configuration and a table in the GWS 1A for searching new connections to new BS.
Fig. 6 is a flow-chart showing a processing procedure of a BS management section in a GWS.
Fig. 7 is a flow-chart showing a searching procedure for new connections to new BS.
Figs. 8(a) to 8(d) are explanatory diagrams showing an example of a connection setting according to the present invention in the mobile communication network in accordance with the movement of the MS 4. Fig. 8(a) shows an example when the MS 4 is locating in the radio area of BS 3A, Fig. 8(b) shows an example when the MS 4 has moved over to the radio area of BS 3B, Fig. 8(c) shows an example when the MS 4 has further mover over to the radio area of BS 3C, and Fig. 8(d) shows an example when the MS 4 has moved back to the radio area of BS 3B.
Figs. 9(a) to (b) are explanatory diagrams showing an example of a conventional connection setting in the mobile communication network according to movement of the MS 4. Fig. 9(a) shows an example when the MS 4 is locating in the radio area of BS 3A, Fig. 9(b) shows an example when the MS 4 has moved over to the radio area of BS 3B, Fig. 9(c) shows an example when the MS 4 has further mover over to the radio area of BS 3C, and Fig. 9(d) shows an example when the MS 4 has moved back to the radio area of BS 3B.

### DETAILED DESCRIPTION OF THE PREFERRED EMBODIMENTS

The present invention will be described with reference to the drawings.

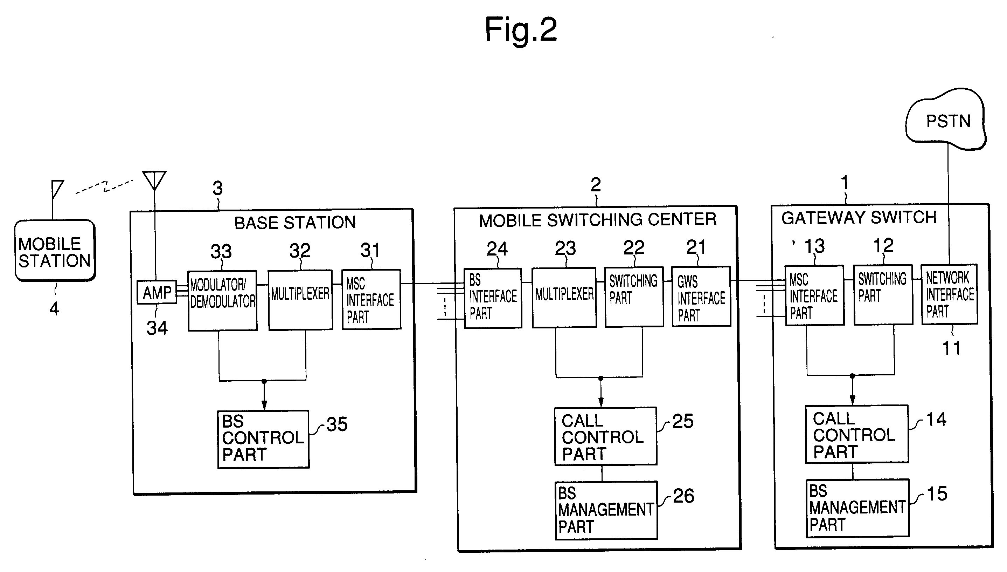

Fig. 2 is a block diagram showing a TDMA mobile communication system according to an embodiment of the present invention, and in the figure, a gateway switch (GWS) 1 is a transit switching system for providing interface function with another communication network such as a present switched telephone network (PSTN) as described for Fig. 1.

The GWS 1 includes: a network interface part 11 that is connected to the PSTN and providing necessary interface function; an MSC interface part 13 that is connected to the mobile switching center (MSC) 2 through transmission lines for providing necessary interface function with the MSC; a switching part 12 that provides switched path to connect the network interface part 11 and the MSC interface part 13; a call control part 14 that controls entire operation of the GWS, and a BS management part 15 that holds necessary information to manage the connection to a base station (BS) being communicating with a mobile station (MS).

The mobile switching center (MSC) 2 is a transit switching system which provides a connection between the respective BSs 3 and a connection between the BS 3 and the GWS 1.

The MSC 2 includes: a GWS interface part 21 that is connected to the GWS 1 through transmission lines and providing necessary interface function with the GWS 1; a BS interface part 24 that is connected to the BS 3 through transmission lines and providing necessary interface function with the BS; a switch part 22 and a multiplex 23 which provides switched path to connect the GWS interface part 21 and the BS interface part 24.

Further, the MSC 2 includes: a call control part 25 that controls entire operation of the MSC, i.e. controlling communication with the MS 4 through the BS 3, controlling a call origination and reception, managing a resource such as a speech channel or transmits a control information received from the BS 3 to a host GWS 1; and a BS management part 26 that holds the necessary information of the respective BS 3 for each of the MSC and also for each of the GWSes to manage the connection.

Also, the base station (BS) 3 includes: an MSC interface part 31 that is connected to the MSC 2 through transmission lines; an amplifier (AMP) 34 and a modulator/demodulator 33 for communication with the MS 4 through radio signals (TDMA system); a multiplex 32 that relays communication signals with the MS 4 and a connection with the MSC 2; and a BS control part 35 that controls entire operation of the BS and transmits the necessary information to a host unit such as MSC and GWS.

As the necessary information managed in the BS management part 15 in the GWS 1 and the BS management part 26 in the MSC 2, the color code will be explained in the next.

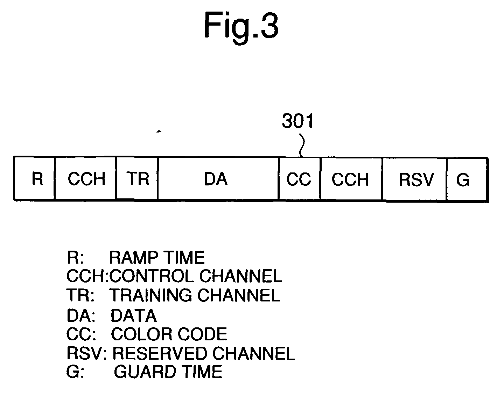

The color code is generally a signal assigned to the signal frame of a time slot in the TDMA system in order to discriminate whether or not a received signal is from a communication counterpart and it is not an interference signal. A different pattern of the color code is set for the respective base stations. Fig. 3 is an explanatory diagram showing an example of a signal format of a time slot in the TDMA system, and in this case, a color code area (CC) 301 is provided next to a data area (DA).

The present invention identifies the BS 3 by using the color codes.

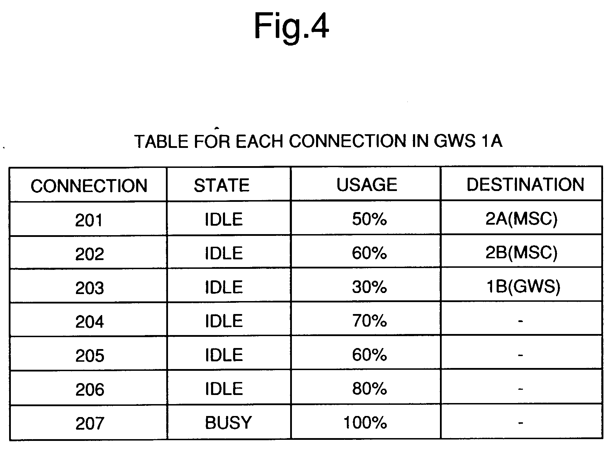

There is another necessary information managed in the BS management part 15 in the GWS 1, that is connection state or connection usage information for each GWS. Fig. 4 shows an example of a table in the GWS 1A for each connection state in the mobile communication network shown in Fig. 1.

As shown in Fig. 1, connections 201, 202 and 203 are connected to the GWS 1A. Therefore, the GWS 1A can obtain busy/idle (state) information of each of those connections, and if necessary, usage rate of each connection can also be obtained. With respect to other connections such as 204, 205, 206 and 207 which are not connected to the GWS 1A directly, the state information and/or the usage rate information for each connection is transmitted, by using the common channel signaling system such as No.7 signaling system which is not shown in Fig. 1, from GWS and MSC which connect those connections directly. That is, each GWS or MSC is exchanging the connection state information and/or the usage rate information each other, and as shown in Fig. 4, each connection state and usage rate in the mobile communication network is summarized in each GWS.

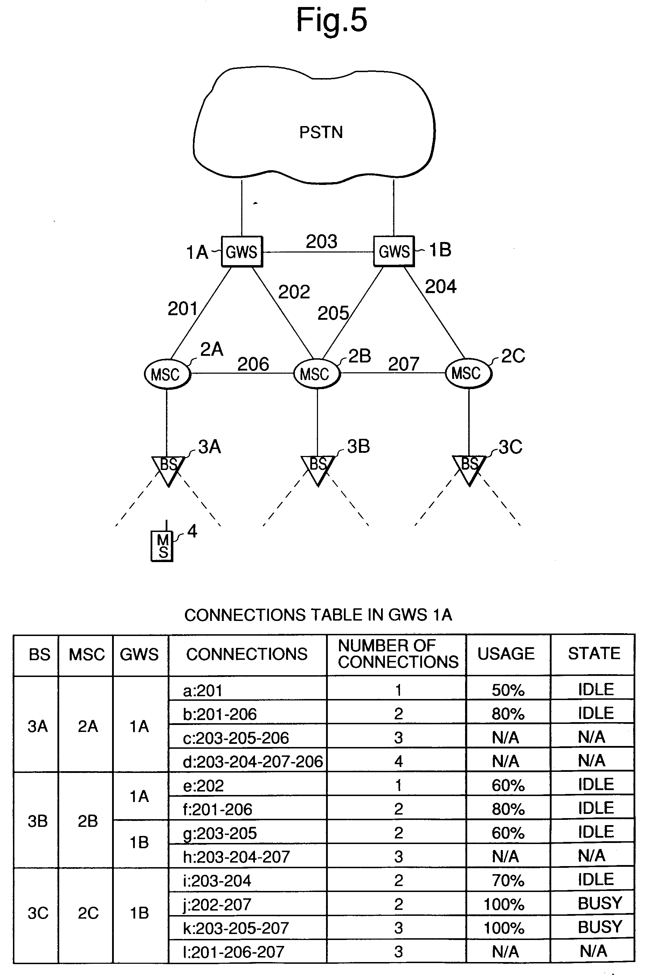

Each GWS has a connection table as shown in Fig. 5 based on summarized information in the table shown in Fig. 4. In this connection table, available connections to a particular BS (corresponding to a controlling MSC) are shown.

For example, from the GWS 1A to the BS 3A, four types of connections of a: 201 to d: 203-204-207-206 are considered. However, connection types c and d are not applicable due to a routing rule in the mobile communication network, e.g. a routing to an MSC under own GWS control through the other GWS is to be restricted. Among other connections a: 201 and b: 201-206 which are available for selection, the connection a: 201 is to be selected because of fewer number of connections involved.

If the GWS 1A to the BS 3B, the connection e: 202 is to be selected, and the connection i: 203-204 is selected for routing from the GWS 1A to the BS 3C.

Then, the operation of the present invention will be described with reference to Figs. 5 to 8.

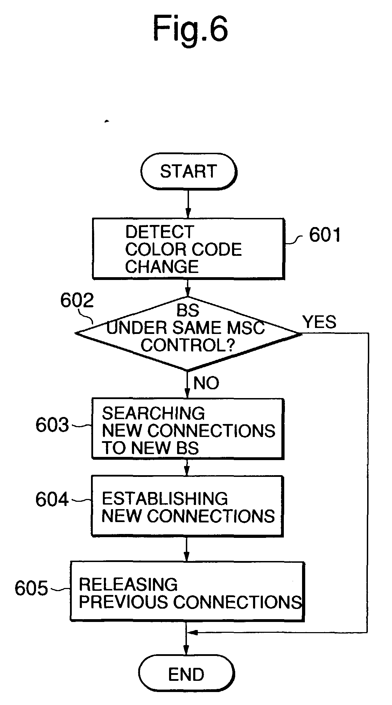

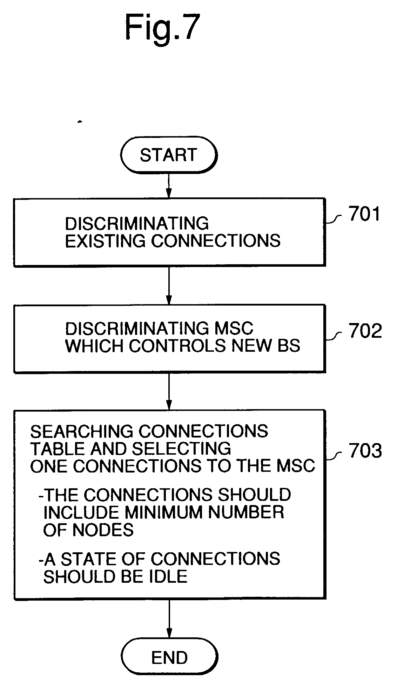

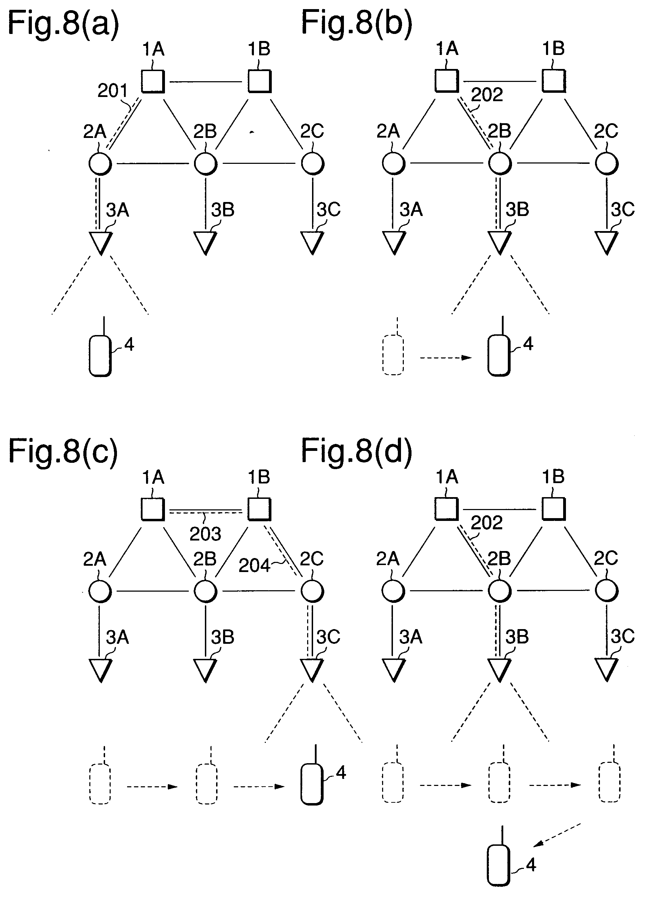

Fig. 8 is an explanatory diagram showing an example of a connection setting according to the present invention; and Figs. 6 and 7 are flow-charts showing a processing procedure of the BS management section in the GWS.

Likewise as the above-described Fig. 1, the GWS 1A is connected with MSC 2A (201) and MSC 2B (202), and the GWS 1B is connected with the MSC 2B (205) and MSC 2C (204). Also, the respective MSCs 2A to 2C are connected with the BSs 3A to 3C, respectively. Further, a connection is made between the GWSes 1A and 1B (203), between the MSCs 2A and 2B (206), and between the MSCs 2B and 2C (207).

It is assumed that the MS 4 is locating in a radio area of the BS 3A, and as shown in Fig. 8(a), a connection 201 is established between the MSC 2A connected with the BS 3A and the GWS 1A.

In the case where the MS 4 has moved to the service area of the BS 3B which is controlled by the MSC 2B, the hand-over operation is performed and a connection 206 is set between the MSCs 2A and 2B as in the conventional manner.

The BS management part 26 of the MSC 2B notifies the GWS 1A of the color code for a new base station 3B. In this situation, the BS management part 15 of the GWS 1A detects a change of the notified color code (Step 601 of Fig. 6).

Subsequently, the BS management part 15 compares the previous color code with the newly notified color code to judge whether the BS 3B, corresponding to new color code, is a base station controlled by the same mobile switching center controlling the BS 3A, corresponding to the previous color code, or controlled by a different mobile switching center (Step 602 of Fig. 6).

In this situation, if the BS 3B is a base station which is controlled by the same mobile switching center which has controlled the BS 3A (Step 302: yes of Fig. 6), the process is jumped to "END".

On the other hand, if the BS 3B is not a base station which is controlled by the same mobile switching center which has controlled the BS 3A, but a base station which is controlled by a different mobile switching center (Step 602: no of Fig. 6), the call control section 15 searches the new connections, with referring to the table shown in Fig. 5, which is the shortest routing available between the GWS 1A and the MSC 2B which controls the BS 3B to which the MS 4 has moved (Step 603 of Fig. 6).

Then, as shown in Fig. 8(b), while a call is held, a new connection 202 is established between the GWS 1A and the MSC 2B (step 604 of Fig. 6), and the connections which have been used up to now, that is, the connection 201 between the GWS 1A and the MSC 2A, and the connection 206 between the MSCs 2A and 2B are released (step 605 of Fig. 6), and process is then come to "END".

Further, in the case where the MS 4 has moved to the service area of the BS 3C which is controlled by another MSC, a connection 207 is first set between the MSCs 2B and 2C as in the conventional banner. However, since it is discriminated that the BS 3C is controlled by different GWS 1B according to analysis of the color code of the BS 3C, reestablishment of connection involving the GWS 1A and GWS 1B is also performed. Accordingly, as shown in Fig. 8(c), the connections 202 and 207 are released, and a new connection 203 between the GWS 1A and GWS 1B, and a new connection 204 between the GWS 1B and the MSC 2C are established.

Also, similarly, when the MS 4 is returned to the service area of the BS 3B which is controlled by the MSC 2B, a connection 207 between the MSCs 2C and 2B is established as in the conventional manner, but the connections are re-established according to the notification of the color code from the MSC 2B as described above. In this case, as shown in Fig. 8(d), the connections 203, 204 and 207 are released, and a new connection 202 is established between the GWS 1A and the MSC 2B.

Fig. 7 is a flow-chart showing operation of searching new connections to new BS (step 603 of Fig. 6) in more detail. In this situation, the newly searched routing is compared with the present routing, and only when the number of nodes of that routing is reduced, re-establishment of connections is performed.

First of all, the GWS 1A discriminates existing connections (step 701 of Fig. 7), and also discriminates the MSC which controls new BS (step 702 of Fig. 7). Then, the connections table as shown in Fig. 5 is referred to search new connections to the discriminated MSC which is to be the shortest routing. When selecting new connections, the following conditions are to be considered (step 703 of Fig. 7);
1. new connections should include minimum number of nodes in the connections: and
2. a state of each connection in new connections should be "idle", or the usage rare is less than a predetermined threshold usage rate.

When the MS 4 has moved from the service area of the BS 3A to the service area of the BS 3B, re-establishment of connections is performed as described above. At this time, if the previous connection to the MSC 2A was a connection 201, new connection 202 is selected in stead of connections 201-206 as far as the connection 202 is available (state of connection 202 is "idle" or less usage rate than a predetermined usage rate). However, if the connection 202 is not available due to busy state or usage rate is higher than the predetermined rate, re-establishment of connections is not performed and connections 201-206 are maintained.

Further, in the case where the MS 4 has moved to the service area of the BS 3C from the service area of the BS 3B, a connection 207 between the MSCs 2B and 2C is supposed to be selected in the first operation as in the conventional manner. However, since the connection 207 is under busy state and it is not available for selection even in the first operation. Then, new routing (connections 203-204) is selected and re-establishing new connections is performed at the time of hand-over operation.

As a result, the use efficiency of connections can be surely improved, and when it is found during searching operation of new connections that the use efficiency cannot be improved, it is unnecessary to implement a process for re-establishing the connection at the respective nodes, thereby being capable of reducing the processing load.

As was described above, according to the present invention, the GWS monitors the color code that changes according to the movement of the MS from the service area of one BS to another, and when the movement of the MS is detected according to a change of the color code, the shortest routing to the MSC which is controlling the subject BS is searched, and re-establishment of connections using the searched shortest routing is performed.

Accordingly, even when the MS has moved to the service area which is controlled by the MSC under different GWS, routing is reviewed to select the shortest connections and the use efficiency of connections can be prevented from being remarkably lowered which occurs when connections are sequentially established between the MSCs along the movement path of the MS.

Although the present invention has been fully described by way of the preferred embodiments thereof with reference to the accompanying drawings, various changes and modifications will be apparent to those having skill in this field. Therefore, unless these changes and modifications otherwise depart from the scope of the present invention, they should be construed as included therein.

## Claims

1. A method of connection setting for a mobile communication network constituted by a plurality of mobile switching centers, each accommodating a plurality of base stations for communicating with mobile stations, and a plurality of gateway switches, each inter connecting the mobile communication network and the present switched telephone network (PSTN), the method comprising steps of:
searching the shortest routing from the gateway switch to the mobile switching center accommodating the base station under communicating with the mobile station, when a hand-over operation of the mobile station having been detected and the mobile switching center is different from the mobile switching center accommodating the base station communicated with the mobile station before the hand-over operation; and
re-establishing new connections from the gateway switch to the mobile switching center accommodating the base station under communicating with the mobile station, if the shortest routing being available.

2. A method of connection setting for a mobile communication network constituted by a plurality of mobile switching centers, each accommodating a plurality of base stations for communicating with mobile stations by the time division multiple access (TDMA) system, and a plurality of gateway switches, each inter connecting the mobile communication network and the present switched telephone network (PSTN), the method comprising steps of:
receiving and storing a color code, contained in a time slot of the TDMA signal as identification information of base station under communication, at the gateway switch through the mobile switching center accommodating the base station;
detecting a change of the color code in response to a hand-over operation resulted by the movement of the mobile station from service area of one base station to another base station;
searching the shortest routing from the gateway switch to the mobile switching center accommodating the base station under communicating with the mobile station, when the mobile switching center is different from the mobile switching center accommodating the base station communicated with the mobile station before the hand-over operation; and
re-establishing new connections from the gateway switch to the mobile switching center accommodating the base station under communicating with the mobile station, if the shortest routing being available.

3. A method of connection setting for a mobile communication network constituted by a plurality of mobile switching centers, each accommodating a plurality of base stations for communicating with mobile stations, and a plurality of gateway switches, each inter connecting the mobile communication network and the present switched telephone network (PSTN), the method comprising steps of:
extending a connection from one mobile switching center accommodating the base station communicated with the mobile station before a hand-over operation to another mobile switching center accommodating the base station under communicating with the mobile station after the hand-over operation;
searching the shortest routing from the gateway switch to the mobile switching center accommodating the base station under communicating with the mobile station, when a hand-over operation of the mobile station having been detected and the mobile switching centers involved before and after the hand-over operation are different from each other;
releasing previous connections including extended connection from one mobile switching center accommodating the base station before a hand-over operation to another mobile switching center accommodating the base station after the hand-over operation; and
establishing new connections from the gateway switch to the mobile switching center accommodating the base station under communicating with the mobile station, if the shortest routing being available.

4. A method of connection setting for a mobile communication network constituted by a plurality of mobile switching centers, each accommodating a plurality of base stations for communicating with mobile stations by the time division multiple access (TDMA) system, and a plurality of gateway switches, each inter connecting the mobile communication network and the present switched telephone network (PSTN), the method comprising steps of:
receiving and storing a color code, contained in a time slot of the TDMA signal as identification information of base station under communication, at the gateway switch through the mobile switching center accommodating the base station;
extending a connection from one mobile switching center accommodating the base station communicated with the mobile station before a hand-over operation to another mobile switching center accommodating the base station under communicating with the mobile station after the hand-over operation;
detecting a change of the color code in response to the hand-over operation at the gateway switch;
searching the shortest routing from the gateway switch to the mobile switching center accommodating the base station under communicating with the mobile station, when it is detected that the mobile switching centers involved before and after the hand-over operation are different from each other;
releasing previous connections including extended connection from one mobile switching center accommodating the base station before a hand-over operation to another mobile switching center accommodating the base station after the hand-over operation; and
establishing new connections from the gateway switch to the mobile switching center accommodating the base station under communicating with the mobile station, if the shortest routing being available.

5. A method of connection setting for a mobile communication network as claimed in claim 1, wherein the gateway switch being provided with a connection table indicating all routes from own gateway switch to each mobile switching center constituting the mobile switching network with busy or idle state information for each route, searching a route, involving a minimum number of nodes and the state information being an idle state, comparing with existing route to the destination mobile switching center, and selecting the searched route for re-establishing if the searched route being shorter than the existing route.

6. A method of connection setting for a mobile communication network as claimed in claim 2, wherein the gateway switch being provided with a connection table indicating all routes from own gateway switch to each mobile switching center constituting the mobile switching network with busy or idle state information for each route, searching a route, involving a minimum number of nodes and the state information being an idle state, comparing with existing route to the destination mobile switching center, and selecting the searched route for re-establishing if the searched route being shorter than the existing route.

7. A method of connection setting for a mobile communication network as claimed in claim 3, wherein the gateway switch being provided with a connection table indicating all routes from own gateway switch to each mobile switching center constituting the mobile switching network with busy or idle state information for each route, searching a route, involving a minimum number of nodes and the state information being an idle state, comparing with existing route to the destination mobile switching center, and selecting the searched route for re-establishing if the searched route being shorter than the existing route.

8. A method of connection setting for a mobile communication network as claimed in claim 4, wherein the gateway switch being provided with a connection table indicating all routes from own gateway switch to each mobile switching center constituting the mobile switching network with busy or idle state information for each route, searching a route, involving a minimum number of nodes and the state information being an idle state, comparing with existing route to the destination mobile switching center, and selecting the searched route for re-establishing if the searched route being shorter than the existing route.
